# FASCICULE DE BREVET EUROPEEN

(11) **EP 2 237 397 B1**
(45) Date de publication et mention de la délivrance du brevet: **15.01.2020**
(21) Numéro de dépôt: 10305306.2
(22) Date de dépôt: 25.03.2010
(51) Int. Cl.: H02K 7/02, H02K 16/00, H02K 7/08

(54) **Dispositif de stockage d'énergie électrique sous forme d'énergie cinétique amélioré, véhicule ferroviaire équipé d'un tel dispositif**
Vorrichtung zum Speichern von elektrischer Energie durch kinetischer Energie und Schienenfahrzeug mit einer solchen Vorrichtung
Device for energy storage as kinetic energy and railway vehicle comprising such a device

(30) Priorité: 01.04.2009 FR 0952086
(43) Date de publication de la demande: 06.10.2010
(73) Titulaire: ALSTOM Transport Technologies, 93400 Saint-Ouen (FR)
(72) Inventeur: Boualem, Benali, 25660 Saone (FR)
(74) Mandataire: Lavoix

(56) Documents cités:
- DE-C1- 19 608 099
- US-A- 4 870 310
- US-A- 5 838 085
- US-A- 6 087 753
- US-A1- 2007 114 795
- US-A1- 2007 199 744
- MUSIL VON R ET AL: "NEW INDIRECT WATER COOLING FOR THE HIGH-SPEED FLYWHEEL OF A SURGE-POWER MOTOR-GENERATOR SET" SIEMENS POWER ENGINEERING, SIEMENS AG. BERLIN, DE, vol. 5, no. 2, 1 mars 1983 (1983-03-01), pages 82-85, XP002046855
- VON B. STORSAND: "OERLIKON. Der Elektrogyro, ein kinetischer Energiespeicher für Fahrzeugbetrieb" 1951, JEAN FREY AG , ZÜRICH 15 , XP001447838 * le document en entier *

## Description

L'invention a pour domaine celui des dispositifs de stockage d'énergie électrique sous forme d'énergie cinétique du type comportant, logé à l'intérieur d'un carter, un volant d'inertie de forme annulaire, solidarisé à un arbre par l'intermédiaire d'un voile, l'arbre étant monté libre en rotation sur le carter par l'intermédiaire de moyens de roulement, ainsi que des moyens de conversion aptes à transformer une énergie électrique appliquée en entrée du dispositif en une énergie mécanique emmagasinée dans le volant d'inertie et de transformer une énergie mécanique emmagasinée dans le volant d'inertie en une énergie électrique en sortie du dispositif.

Ainsi, le document VON B. STORSAND : « OERLIKON. Der Electrogyro, ein kinetischer Energiespeicher für Fahrzeugbetrieb" 1951, JEAN FREY AG, ZÜRICK 15 divulgue un dispositif de stockage conforme au préambule de la revendication 1.

Pour des applications ferroviaires, de tels dispositifs de stockage doivent répondre à des exigences en termes de dimensionnement, en particulier en ce qui concerne la masse globale du dispositif de stockage et son encombrement. Par exemple, lorsqu'un tel dispositif de stockage est disposé sur le toit d'un tramway, il doit avoir une hauteur inférieure à environ 50 cm, ce qui correspond à la distance entre le toit du tramway et les caténaires électrifiées. De plus, il ne faut pas que la masse totale du dispositif de stockage soit trop importante, ce qui risquerait de pénaliser les performances du tramway. Il s'agit donc de proposer un dispositif de stockage qui soit compact

De plus, les applications ferroviaires se traduisent par une forte consommation d'énergie, par exemple pour alimenter les dispositifs de traction et/ou les auxiliaires. Il faut donc que le dispositif de stockage soit apte à stocker une quantité importante d'énergie mécanique.

Enfin, le dispositif de stockage doit présenter une puissance élevée. Les moyens de conversion doivent permettre de stocker une grande quantité d'énergie dans le volant d'inertie en un temps court, correspondant par exemple à un temps d'arrêt du tramway en gare, typiquement de l'ordre de 20 secondes.

Le document US 6,172,435 B1 décrit un dispositif de stockage du type précité qui présente une bonne compacité.

Dans ce dispositif connu, la roue solidarisant le volant d'inertie à l'arbre présente un voile formant une cloche au-dessus de l'ensemble rotor/stator. De plus, l'arbre, disposé verticalement, repose, par son extrémité inférieure, sur le fond du carter et est maintenu, par son extrémité supérieure, par un unique palier. Avec un tel assemblage, les masses tournantes constituent une sorte de toupie. Le dispositif est, par conséquent, sensible à une répartition non homogène des masses autour de l'axe de rotation. Une répartition homogène des masses étant très difficile à réaliser à faibles coûts, un tel dispositif présente un certain balourd, dont les effets sont particulièrement préjudiciables aux vitesses élevées. Ne pouvant fonctionner à des vitesses de rotation élevées, un tel dispositif ne peut être utilisé pour le stockage d'une grande quantité d'énergie.

Par ailleurs, à masse et à hauteur constantes, pour augmenter le moment d'inertie du volant d'inertie annulaire afin d'y stocker plus d'énergie, on augmente son diamètre intérieur. En conséquence, le diamètre externe du rotor est également augmenté puisque, dans le dispositif connu, la paroi extérieure du rotor est fixée sur la paroi intérieure du volant d'inertie annulaire. Le rotor est constitué par un empilement de tôles métalliques réalisées en un acier magnétique doux pour assurer un retour complet du flux magnétique produit par le stator. Or, cet acier a un coût et l'augmentation du diamètre du rotor a un impact négatif sur le coût global du dispositif de stockage. De plus, plus le diamètre du rotor augmente, plus son moment d'inertie augmente. Sa réalisation doit donc être particulièrement soignée pour éviter une mauvaise répartition des masses autour de l'axe de rotation. Si, pour réduire ces effets de balourd, on cherche à sous dimensionner le rotor par rapport au stator, le matériau magnétique dont est constitué le rotor est rapidement saturé magnétiquement et le retour du flux du stator n'est plus complet. De ce fait, le convertisseur présente de nombreuses fuites magnétiques qui se traduisent par une perte de puissance du dispositif de stockage.

Enfin, la compacité du dispositif est la cause de nombreuses contraintes secondaires sur les différents composants du dispositif de stockage, ces contraintes ayant pour effet de limiter la durée de vie du dispositif. Ces contraintes secondaires sont du type mécanique, magnétique et thermique. Par exemple, le rotor tournant dans un champ magnétique, il est le siège de pertes par hystérésis et courants de Foucault. De ce fait, au cours du fonctionnement du dispositif, le rotor s'échauffe. Une fraction de cette chaleur est transmise au volant d'inertie sur lequel est fixé le rotor. Il y a alors une dilatation différentielle des matériaux situés de part et d'autre de la liaison entre le rotor et le volant. En conséquence, cette liaison subit des contraintes mécaniques importantes, constituant un facteur limitant la durée de vie du dispositif de stockage connu. De plus, la chaleur génère une dilatation mal maîtrisée du matériau constitutif du volant d'inertie. Ces dilatations locales produisent des variations de masses qui sont préjudiciables pour l'équilibrage de la machine tournante. Celle-ci ne peut être utilisée à des vitesses élevées. Enfin, par exemple lorsque le volant d'inertie est réalisé en un matériau composite, par exemple en bobinant un fils de carbone, l'exposition régulière à des températures élevées conduit à un vieillissement prématuré du matériau composite.

L'invention a donc pour but de proposer un dispositif de stockage d'énergie cinétique amélioré par rapport à l'état de la technique, en particulier présentant un meilleur équilibrage et prenant en compte les contraintes mécaniques, magnétiques et thermiques résultant d'un montage fortement intégré du dispositif de stockage, pour que ce dernier puisse être mis en œuvre dans des applications ferroviaires.

Par ailleurs, US 5,838,085 divulgue une machine, qui comporte deux paires rotor-stator pour pouvoir fonctionner selon trois modes possibles : 1) en moteur, en appliquant une puissance électrique aux stators ; 2) en générateur, en entraînant en rotation l'arbre ; et 3) en moteur-générateur, en appliquant une puissance électrique aux stators de l'une des paires de stator-rotor pour mettre en rotation l'arbre et entraîner en rotation le rotor de l'autre paire rotor-stator.

US 2007/199744 A1 divulgue un dispositif apte à fonctionner soit en générateur de courant, soit en moteur d'entraînement. Pour ce faire, le dispositif comporte un premier rotor solidaire d'un arbre et un stator entourant le rotor. Le dispositif comporte, en outre, un volant d'inertie, monté libre en rotation autour de l'arbre et coopérant avec le stator pour stocker, sous forme d'énergie cinétique, de l'énergie électrique. Ce document enseigne que les rotors, l'arbre, et les manchons et les plaques de couplage des rotors à l'arbre sont tels que la machine emmagasine une énergie mécanique de rotation permettant, en cas d'interruption de l'alimentation en courant alternatif, de maintenir l'arbre en rotation durant quelques secondes.

Le document US 2007/114795 divulgue un dispositif intégrant un volant d'inertie disposé verticalement et entraîné par deux moteurs électriques situés de part et d'autre du volant et à distance de celui-ci.

Le document US 4 870 310 présente un volant d'inertie selon une autre technologie.

L'invention est définie par les revendications.

L'invention et ses avantages seront mieux compris à la lecture de la description qui va suivre, donnée uniquement à titre d'exemple, et faite en se référant aux dessins annexés, sur lesquels :
- La Figure 1 est une coupe axiale d'un dispositif de stockage d'énergie électrique sous forme d'énergie cinétique selon un premier mode de réalisation ; et,
- La Figure 2 est une coupe axiale d'un dispositif de stockage d'énergie électrique sous forme d'énergie cinétique selon un second mode de réalisation.

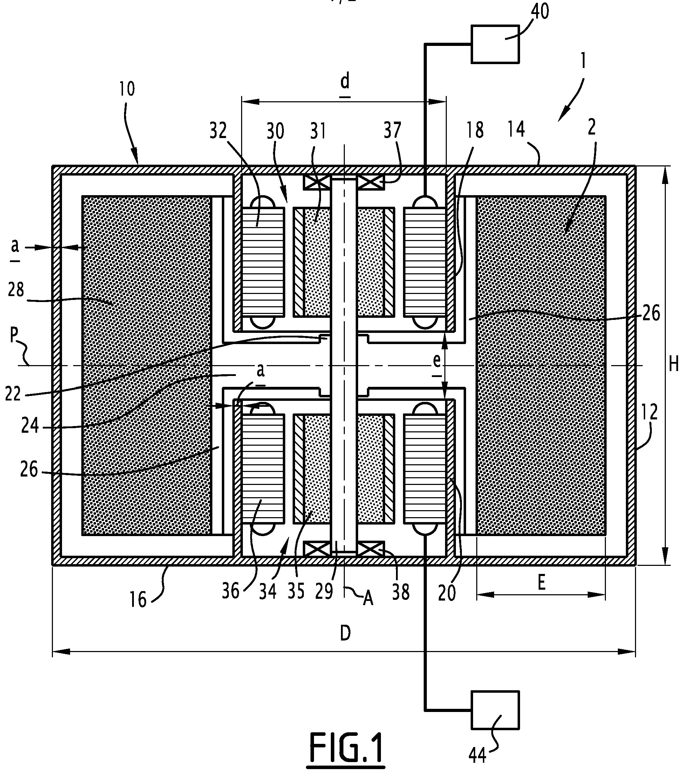

La Figure 1 représente un dispositif de stockage selon un premier mode de réalisation. Le dispositif de stockage 1 est symétrique par rapport à un plan médian P perpendiculaire à l'axe de rotation A d'un volant d'inertie 2, de manière à en améliorer l'équilibrage pour en garantir le fonctionnement à des vitesses de rotation élevées, synonymes de l'accumulation d'une grande quantité d'énergie cinétique.

Le dispositif de stockage 1 comporte un carter 10 réalisé en tôles d'épaisseur a et ayant extérieurement la forme d'un cylindre autour de l'axe de rotation A. Le carter 10 est de diamètre D et de hauteur H. Le carter 10 permet de fixer le dispositif de stockage 1 sur le toit d'un tramway. Lorsque le dispositif de stockage 1 est positionné sur le toit d'un tramway, l'axe de rotation A est orienté verticalement.

Le carter 10 comporte une paroi latérale 12, une paroi supérieure 14 et une paroi inférieure 16. Le carter 10 est étanche de manière à y maintenir un vide relatif pour réduire les frottements et les dissipations d'énergie entre les différents composants du dispositif de stockage 1.

Intérieurement, le carter 10 comporte, de part et d'autre du plan médian P, deux cloisons cylindriques intérieures 18 et 20, disposées coaxialement à l'axe de rotation A. Elles présentent un diamètre intérieur d. Le rebord supérieur de la cloison intérieure supérieure 18 est soudé à la paroi supérieure 14 du carter 10, et le rebord inférieur de la cloison intérieure 20 est soudé ou assemblé par vis à la paroi inférieure 16 du carter 10. Les rebords libres de chacune des cloisons intérieures 18 et 20 sont placés en vis-à-vis l'un de l'autre et espacés d'un intervalle e prédéterminé.

Logé à l'intérieur du carter 10, le dispositif de stockage 1 comporte un volant d'inertie 2 annulaire. Le volant d'inertie 2 comporte un moyeu 22, un voile 24, une jante 26 portant une masse annulaire 28. La forme de la masse annulaire est obtenue par révolution d'une section sensiblement rectangulaire autour de l'axe de rotation A, cette section ayant une hauteur légèrement inférieure à la hauteur intérieure H - 2a du carter 10, et une épaisseur E légèrement inférieure à la différence entre le diamètre intérieur D - 2a du carter 10 et le diamètre extérieur d + 2a des cloisons intérieures 18 et 20.

Le volant d'inertie 2 est disposé dans le carter 10 de manière à recevoir les cloisons intérieures 18 et 20 à l'intérieur de la circonférence de sa jante 26. Les dimensions du volant d'inertie 2 sont adaptées à celles du carter 10 de manière à maintenir un espacement minimal permettant la rotation du volant 2 par rapport au carter 10, fixe, tout en maximisant le volume occupé par le volant 2 pour que le dispositif de stockage 1 puisse emmagasiner une énergie importante compte tenu du volume du carter 10.

Le volant 2 est solidarisé à un arbre de rotation 29 s'étendant le long de l'axe de rotation A. Le volant 2 est solidarisé à l'arbre 29 au moyen de son moyeu 22 de manière que son voile 24, symétrique par rotation autour de l'axe A, s'étende radialement dans le plan médian P. Le voile 24 présente une épaisseur légèrement inférieure à l'intervalle e ménagé entre les rebords libres des parois intérieures 18 et 20 du carter 10 pour autoriser la rotation du voile 24 entre les parois intérieures 18 et 20, fixes.

Les extrémités supérieure et inférieure de l'arbre 29 sont maintenues, respectivement, aux parois supérieure 14 et inférieure 16 du carter 10, par deux paliers, respectivement supérieur 36 et inférieur 38. Ces paliers sont disposés symétriquement de part et d'autre du plan médian P. Ces moyens de maintien de l'arbre 29 sur le carter 10 autorisent un degré de liberté de rotation de l'arbre 29 autour de l'axe de rotation A. La présence de ces deux paliers permet de maintenir un alignement précis de l'arbre 29 au cours de l'utilisation du dispositif de stockage 1, en particulier lorsqu'il tourne à grande vitesse. Le dispositif 1 étant destiné à être installé de sorte que l'axe A soit disposé verticalement, les paliers 36 et 38 sont des paliers de butée permettant de supporter une charge axiale.

En tant que moyens de conversion de l'énergie électrique en énergie mécanique de rotation du volant d'inertie 2 et inversement, le dispositif de stockage 1 comporte deux ensembles rotor/stator qui sont respectivement disposés de part et d'autre du voile 24 et logés à l'intérieur de la jante 26 du volant d'inertie 2, à l'intérieur du volume délimité par les parois intérieures 18 et 20 du carter 10.

L'ensemble rotor/stator supérieur 30 comporte un rotor 31 fixé directement sur l'arbre 29. L'ensemble rotor/stator supérieur 30 comporte un stator 32 solidaire de la face intérieure orientée vers l'arbre 29 de la cloison intérieure 18. De manière symétrique, l'ensemble rotor/stator inférieur 34 comporte un rotor 35 fixé directement sur l'arbre 29 et un stator 36 solidaire de la face intérieure orientée vers l'arbre 29 de la cloison intérieure 20.

Dans ce premier mode de réalisation, chaque ensemble rotor/stator 30, 34 constitue un convertisseur électrique à flux radial par rapport à l'axe de rotation A. De plus, ce convertisseur électrique est tel que le stator entoure le rotor.

En réalisant les moyens de conversion en deux ensembles rotor/stator montés symétriquement par rapport au plan P, la machine tournante est mieux équilibrée.

Par ailleurs, chaque ensemble rotor/stator 30, 34 étant confiné par une cloison intérieure 18, 20, la chaleur produite par chacun des ensembles rotor/stator ne vient pas dégrader les performances du volant d'inertie 22.

En positionnant le rotor directement sur l'arbre, on réduit les dimensions du rotor. De ce fait, la quantité de matériau magnétique à utiliser pour réaliser le rotor est réduite, ce qui permet de limiter les coûts liés à la réalisation des rotors. Ceux-ci peuvent alors être dimensionnés uniquement en fonction du flux magnétique créer par le stator et qu'il faut canaliser. De plus, en étant plus proche de l'axe de rotation, les rotors participent moins au comportement dynamique de la machine tournante. En particulier, des variations de la masse des rotors par rapport à l'axe de rotation n'affectent que peu l'équilibrage des masses tournantes. Des vitesses de rotation importantes peuvent alors être atteintes.

Les deux ensembles rotor/stator 30, 34, sont alimentés par un même onduleur réversible utilisable dans les deux modes de fonctionnement. En variante, et comme cela est représenté sur les figures, ils sont alimentés séparément par deux onduleurs associés 40 et 44. Avantageusement, l'un des ensembles rotor/stator réalise les performances moyennes du volant d'inertie et l'autre ensemble rotor/stator est piloté pour réaliser les performances maximales du volant d'inertie.

Dans une variante de réalisation, indépendante des autres variantes présentées ci-dessus, le dispositif comporte un circuit de refroidissement par circulation de liquide dont la tubulure est portée par les cloisons cylindriques intérieures 18 et 20. Ce circuit permet d'augmenter la capacité de refroidissement du stator qui est la cause de la plupart des pertes thermiques du dispositif et d'augmenter le confinement thermique du stator.

Eventuellement, l'accès à ce circuit est rendu possible par des trappes prévues sur les parois 14 et 16.

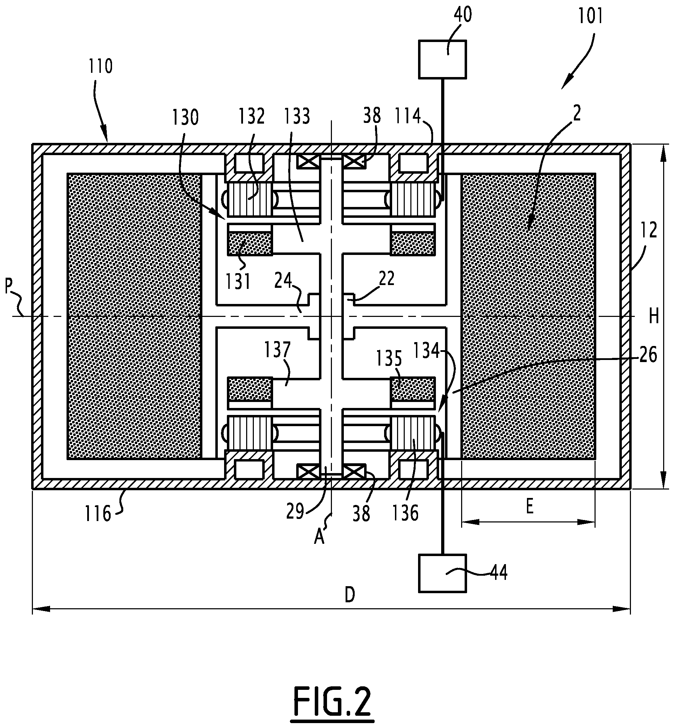

La Figure 2 représente un autre mode de réalisation du dispositif de stockage d'énergie. Sur la Figure 2, un composant identique à un composant représenté sur la figure 1 est référencé par le même nombre de référence, en revanche, un composant similaire à un composant représenté sur la Figure 1 est référencé par un nombre de référence augmenté d'une centaine par rapport au chiffre de référence utilisé pour référencer le composant de la Figure 1.

Le dispositif de stockage 101 comporte un carter extérieur 110 de forme essentiellement cylindrique par rapport à l'axe de rotation A. Le carter 110 reçoit intérieurement un volant d'inertie annulaire 2. Le volant 2 est solidarisé à un arbre 29 par l'intermédiaire d'un moyeu 22 de sorte que le voile 24 du volant 2 est disposé dans le plan médian P par rapport auquel l'ensemble du dispositif de stockage 101 est symétrique.

L'arbre 29 est maintenu en alignement avec l'axe de rotation A, libre en rotation par rapport au carter 110, par l'intermédiaire de deux paliers, respectivement supérieur 36 et inférieur 38.

Les moyens de conversion permettant de transformer l'énergie électrique en énergie cinétique et inversement. Ils comportent deux ensembles rotor/stator 130 et 134 disposés de part et d'autre du plan médian P. Dans ce second mode de réalisation, chaque ensemble rotor/stator 130, 134, constitue un convertisseur électrique à flux axial, c'est-à-dire que les lignes de champs sont parallèles à l'axe de rotation A. Plus précisément, l'ensemble rotor/stator supérieur 130 comporte un stator 132, de forme annulaire autour de l'axe de rotation A, solidaire de la paroi supérieure 114 du carter 110, et un rotor 131, également de forme annulaire autour de l'axe de rotation A, monté sur l'arbre 29 par l'intermédiaire d'un disque 133. Le rotor 131 est disposé en vis-à-vis du stator 132 de manière à ménager un entrefer adapté. De manière similaire, dans la partie inférieure du dispositif de stockage 101, l'ensemble rotor/stator 134 comporte un stator 136 solidaire de la paroi inférieure 116 du carter 110, et un rotor 135, également annulaire, solidaire de l'arbre 29 par l'intermédiaire d'un disque 137. Comme dans le précédent mode de réalisation, le dispositif de stockage comporte deux onduleurs 40 et 44, chaque onduleur étant connecté au bobinage du stator de l'un des deux ensembles rotor/stator.

Tout comme dans le premier mode de réalisation, un ensemble rotor/stator 130, 134, est séparé, autant que faire se peut, du volant d'inertie 22. La chaleur produite par l'ensemble rotor/stator 130, 134 lors de son fonctionnement normal ne se diffuse que vers le volant d'inertie. Celui-ci est séparé thermiquement de l'ensemble rotor/stator.

Une fois encore, le positionnement symétrique des composants du dispositif de stockage 101 par rapport au plan médian P assure un équilibrage précis du volant d'inertie, ce qui permet d'atteindre des vitesses de rotation nominales importantes. Par conséquence, l'énergie cinétique emmagasinée par le dispositif de stockage présenté est importante.

## Revendications

1. Dispositif de stockage d'énergie électrique (1 ; 101) sous forme d'énergie cinétique du type comportant, logé à l'intérieur d'un carter (10 ; 110), un volant d'inertie (2) solidarisé à un arbre (29), l'arbre étant monté libre en rotation par rapport au carter par l'intermédiaire de moyens de roulement comportant au moins deux paliers (37, 38) maintenant l'arbre par ses extrémités, ainsi que des moyens de conversion aptes à transformer une énergie électrique appliquée en entrée du dispositif en une énergie mécanique emmagasinée dans le volant d'inertie et à transformer une énergie mécanique emmagasinée dans le volant d'inertie en une énergie électrique en sortie du dispositif, le dispositif de stockage comportant un premier ensemble rotor/stator (30) constitué d'un rotor et d'un stator, dont le rotor (31) est couplé à l'arbre et le stator (32) est solidaire du carter et entoure le rotor, et un second ensemble rotor/stator (34) constitué d'un rotor et d'un stator, dont le rotor (31, 35) est couplé à l'arbre et le stator (36) est solidaire du carter, le carter (10) comportant deux parois intérieures (18, 20) chaque paroi intérieure (18,20) supportant l'un des stators (32, 36) des deux ensembles rotor/stator (30, 34), **caractérisé en ce que** le dispositif est symétrique par rapport à un plan médian (P) orthogonal à un axe de rotation (A) de l'arbre,
**en ce que** le volant d'inertie est de forme annulaire et un voile (24) du volant d'inertie repose dans le plan médian ;
**en ce que** lesdits moyens de conversion comportent les premier et second ensembles rotor/stator, le rotor de chacun des premier et second ensembles rotor/stator étant fixé directement à l'arbre et le stator de chacun des premier et second ensembles rotor/stator entourant le rotor correspondant ;
et **en ce que** les premier et second ensembles rotor/stator sont disposés de part et d'autre dudit voile et logés à l'intérieur de l'anneau formé par le volant d'inertie (2).

2. Dispositif selon la revendication 1, **caractérisé en ce que** chaque ensemble rotor/stator (30, 34) constitue un convertisseur électrique à flux radial par rapport à l'axe de rotation (A).

3. Dispositif selon la revendication 1 ou la revendication 2, **caractérisé en ce que** chaque paroi intérieure (18, 20) est une cloison cylindrique disposée coaxialement à l'axe de rotation (A).

4. Dispositif selon l'une quelconque des revendications précédentes, **caractérisé en ce que** le carter (10 ; 110) est étanche pour pouvoir maintenir intérieurement un vide relatif.

5. Dispositif selon l'une quelconque des revendications précédentes, **caractérisé en ce qu'**il comporte un unique onduleur couplé électriquement aux deux ensembles rotor/stator (30, 34 ; 130, 134).

6. Dispositif selon l'une quelconque des revendications 1 à 4, **caractérisé en ce qu'**il comporte deux onduleurs, chaque onduleur étant couplé à l'un des deux ensembles rotor/stator (30, 34 ;130, 134).

7. Dispositif selon l'une quelconque des revendications précédentes, **caractérisé en ce qu'**il comporte un circuit de refroidissement du stator, par circulation de liquide.

8. Véhicule ferroviaire comportant un dispositif de stockage d'énergie électrique sous forme d'énergie cinétique, **caractérisé en ce que** ledit dispositif est un dispositif de stockage (10 ; 110) selon l'une quelconque des revendications précédentes.

## Patentansprüche

1. Vorrichtung zur Speicherung elektrischer Energie (1; 101) in Form von kinetischer Energie des Typs aufweisend, untergebracht im Inneren eines Gehäuses (10; 110), ein Schwungrad (2), das mit einer Welle (29) fest verbunden ist, wobei die Welle bezüglich des Gehäuses frei drehbar montiert ist mittels Lager-Mitteln, die wenigstens zwei Wellenlager (37, 38) aufweisen, die die Welle über deren Enden halten, sowie Umwandlungsmittel, die imstande sind, eine elektrische Energie, die als Eingang der Vorrichtung angewandt wird, in eine mechanische Energie zu transformieren, die in dem Schwungrad gespeichert wird, und eine mechanische Energie, die in dem Schwungrad gespeichert ist, in eine elektrische Energie als Ausgang der Vorrichtung zu transformieren, wobei die Vorrichtung zur Speicherung aufweist eine erste Rotor/Stator-Einheit (30), die von einem Rotor und einem Stator gebildet ist, wobei der Rotor (31) mit der Welle gekuppelt ist und der Stator (32) mit dem Gehäuse fest verbunden ist und den Rotor umgibt, und eine zweite Rotor/Stator-Einheit (34), die von einem Rotor und einem Stator gebildet ist, wobei der Rotor (31, 35) mit der Welle gekuppelt ist und der Stator (36) mit dem Gehäuse fest verbunden ist, wobei das Gehäuse (10) zwei innere Wände (18, 20) aufweist, wobei jede innere Wand (18, 20) einen der Statoren (32, 36) der beiden Rotor/Stator-Einheiten (30, 34) hält,
**dadurch gekennzeichnet, dass** die Vorrichtung symmetrisch ist bezüglich einer Mittelebene (P), die senkrecht ist zu einer Drehachse (A) der Welle,
dass das Schwungrad ringförmig ist und ein Radkörper (24) des Schwungrads in der Mittelebene liegt,
dass die Umwandlungsmittel die erste und die zweite Rotor/Stator-Einheit aufweisen, wobei der Rotor von jeder von der ersten und der zweiten Rotor/Stator-Einheit direkt an der Welle befestigt ist und der Stator von jeder von der ersten und der zweiten Rotor/Stator-Einheit den korrespondierenden Rotor umgibt,
und dass die erste und die zweite Rotor/Stator-Einheit beidseits des Radkörpers angeordnet sind und im Inneren des Rings untergebracht sind, der von dem Schwungrad (2) gebildet ist.

2. Vorrichtung gemäß Anspruch 1, **dadurch gekennzeichnet, dass** jede Rotor/Stator-Einheit (30, 34) einen elektrischen Wandler mit radialem Fluss bezüglich der Drehachse (A) bildet.

3. Vorrichtung gemäß Anspruch 1 oder Anspruch 2, **dadurch gekennzeichnet, dass** jede innere Wand (18, 20) eine zylindrische Trennwand ist, die koaxial zur Drehachse (A) angeordnet ist.

4. Vorrichtung gemäß irgendeinem der vorhergehenden Ansprüche, **dadurch gekennzeichnet, dass** das Gehäuse (10, 110) dicht ist, um im Inneren ein relatives Vakuum aufrechterhalten zu können.

5. Vorrichtung gemäß irgendeinem der vorhergehenden Ansprüche, **dadurch gekennzeichnet, dass** es aufweist eine einzige elektrische Stromversorgung für die beiden Rotor/Stator-Einheiten (30, 34; 130, 134).

6. Vorrichtung gemäß irgendeinem der Ansprüche 1 bis 4, **dadurch gekennzeichnet, dass** sie zwei Stromversorgungen aufweist, wobei jede Stromversorgung mit einer der beiden Rotor/Stator-Einheiten (30, 34; 130, 134) gekuppelt ist.

7. Vorrichtung gemäß irgendeinem der vorhergehenden Ansprüche, **dadurch gekennzeichnet, dass** sie aufweist einen Kreislauf zum Kühlen des Stators mittels Flüssigkeitszirkulation.

8. Schienenfahrzeug mit einer Vorrichtung zur Speicherung elektrischer Energie in Form kinetischer Energie, **dadurch gekennzeichnet, dass** die Vorrichtung eine Vorrichtung zur Speicherung (10; 110) gemäß irgendeinem der vorhergehenden Ansprüche ist.

## Claims

1. Device for storing electrical energy (1; 101) in the form of kinetic energy of the type comprising, placed inside a housing (10 ; 110), a flywheel (2) secured to a shaft (29), the shaft being mounted freely rotatable relative to the housing by means of rolling means comprising at least two bearings (37, 38) holding the shaft by its ends, as well as conversion means capable of transforming an electrical energy applied at the input of the device into a mechanical energy stored in the flywheel and of transforming a mechanical energy stored in the flywheel into an electrical energy at the output of the device, the storage device comprising a first rotor/stator assembly (30) consisting of a rotor and a stator, the rotor (31) of which is coupled to the shaft and the stator (32) of which is integral with the housing and surrounds the rotor, and a second rotor/stator assembly (34) consisting of a rotor and a stator, the rotor (31, 35) of which is coupled to the shaft and the stator (36) of which is integral with the housing, the housing (10) having two inner walls (18, 20), each inner wall (18, 20) supporting one of the stators (32, 36) of the two rotor/stator assemblies (30, 34),
**characterised in that** the device is symmetrical with respect to a median plane (P) orthogonal to an axis of rotation (A) of the shaft,
**in that** the flywheel is annular in shape and a web (24) of the flywheel rests in the median plane;
**in that** said conversion means comprises the first and second rotor/stator assemblies, the rotor of each of the first and second rotor/stator assemblies being fixed directly to the shaft and the stator of each of the first and second rotor/stator assemblies surrounding the corresponding rotor;
and **in that** the first and second rotor/stator assemblies are arranged on either side of said web and housed inside the ring formed by the flywheel (2).

2. Device according to claim 1, **characterised in that** each rotor/stator assembly (30, 34) constitutes a radial flow electrical converter with respect to the axis of rotation (A).

3. Device according to claim 1 or claim 2, **characterised in that** each inner wall (18, 20) is a cylindrical partition arranged coaxially to the axis of rotation (A).

4. Device according to any of the previous claims, **characterised in that** the housing (10; 110) is waterproof to be able to internally maintain a relative vacuum.

5. Device according to any of the previous claims, **characterised in that** it includes a single inverter electrically coupled to the two rotor/stator assemblies (30, 34; 130, 134).

6. Device according to any one of claims 1 to 4, **characterised in that** it comprises two inverters, each inverter being coupled to one of the two rotor/stator assemblies (30, 34;130, 134).

7. Device according to any of the preceding claims, **characterised in that** it includes a cooling circuit for the stator, by liquid circulation.

8. Railway vehicle comprising a device for storing electrical energy in the form of kinetic energy, **characterised in that** said device is a storage device (10; 110) according to any one of the previous claims.
